# EUROPÄISCHE PATENTSCHRIFT

(11) **EP 2 526 005 B1**
(45) Veröffentlichungstag und Bekanntmachung des Hinweises auf die Patenterteilung: **20.03.2019**
(21) Anmeldenummer: 11700895.3
(22) Anmeldetag: 19.01.2011
(51) Int. Cl.: B61F 5/50, B61F 19/00, B61F 17/02

(54) **SCHIENENFAHRZEUG FÜR EINEN FAHRBETRIEB AUF GLEISANLAGEN MIT SCHOTTER-OBERBAU**
RAIL VEHICLE FOR A DRIVING OPERATION ON TRACK SYSTEMS HAVING A BALLASTED SUPERSTRUCTURE
VÉHICULE SUR RAILS DESTINÉ À CIRCULER SUR DES VOIES FERRÉES À SUPERSTRUCTURE BALLASTÉE

(30) Priorität: 20.01.2010 DE 102010005250
(43) Veröffentlichungstag der Anmeldung: 28.11.2012
(73) Patentinhaber: DB Fernverkehr AG, 60326 Frankfurt (DE); Siemens Mobility GmbH, 81739 München (DE)
(72) Erfinder: SCHMIDT, Wolfgang, 65824 Schwalbach / Ts. (DE); FASTNACHT, Dieter, 32547 Bad Oeynhausen (DE); KRUMPF, Alfred, 82418 Murnau (DE); KUPIES, Jürgen, 47239 Duisburg (DE); SCHROEDER-BODENSTEIN, Kasper, 40547 Düsseldorf (DE); SCHOLZ, Maik, 06526 Sangerhausen / Grillenberg (DE)
(74) Vertreter: Zinken-Sommer, Rainer
(86) Internationale Anmeldenummer: PCT/EP2011/000207
(87) Internationale Veröffentlichungsnummer: WO 2011/088996

(56) Entgegenhaltungen:
- EP-A2- 1 640 499
- WO-A1-2007/065682
- DE-A1-102004 041 090
- DE-C- 726 181
- US-A- 5 111 752

## Beschreibung

Die Erfindung betrifft ein Schienenfahrzeug für einen Fahrbetrieb auf Gleisanlagen mit Schotter-Oberbau, wobei das Schienenfahrzeug im Bereich seines Unterbodens mindestens eine biegeschlaffe Membran aufweist, welche zu den Gleisanlagen hin offen liegende Hohlräume oder Tragwerks-Strukturen des Unterbodens des Schienenfahrzeugs überspannt.

Ein solches Schienenfahrzeug ist beispielsweise aus der DE 726 181 C bekannt, wobei dort zur Überbrückung eines Abstandes zwischen einer Wagenkastenverkleidung und einer Drehgestellverkleidung eine balgartige Verbindung angeordnet ist.

Im Fahrbetrieb solcher Fahrzeuge ergibt sich häufig das Problem, dass einzelne Schottersteine durch Einwirkungen vielfältiger Art während des Überfahrens durch Schienenfahrzeuge aus dem Schotterbett herausgerissen und hochgeschleudert werden, wobei solche Schottersteine mit hoher Wucht gegen den Unterflurbereich des überfahrenden Schienenfahrzeugs prallen und dort Schäden verursachen können. Ebenso können Schäden an Installationen der Gleisinfrastruktur (z.B. Gleisschaltmittel) hervorgerufen werden. Dieser Vorgang kann sich durch solche Schottersteine, die wieder in das Gleisbett einschlagen und dort das Aufwirbeln mehrerer weiterer Schottersteine verursachen, zu einer massiven und sich über einen längeren Zeitraum selbst aufrecht erhaltenden Schotterlawine aufschaukeln. Dieses Phänomen ist in Fachkreisen als Schotterflug, Schotterwurf oder Schotterschlag einschlägig bekannt. Die Problematik des Schotterfluges tritt vor allem beim Überfahren von Schienenanlagen mit konventionellem Schotter-Oberbau mit Fahrgeschwindigkeiten von über 200 km/h auf.

Die EP 050 200 B1 offenbart dem Fachmann eine komplette Einhausung aller beschädigungsanfälligen Unterflur-Bereiche eines Schienenfahrzeuges, wobei die dort befindlichen Aggregate über seitlich angeordnete Klappen für Wartungs- oder lnstandhaltungszwecke zugänglich sind. Diese technische Lehre beschränkt sich aber darauf, die fahrzeugseitigen Folgen des Schotterfluges zu minimieren. Allerdings besteht weiterhin das Problem, dass zum einen in der Praxis fahrzeugseitig nicht sämtliche Unterflur-Bereich eingehaust werden können und zum anderen diese technische Lehre keinen Lösungsansatz für die infrastrukturseitigen Schäden aus dem Schotterflug aufzeigt.

Die DE 10 2004 041 090 A1 schlägt zur Lösung dieses Problems eine Abschirmung des Schienenfahrzeuges im Unterflurbereich mittels Deflektor-Elementen vor, die durch ihre Gestaltung und Anordnung entgegen der Fahrtrichtung des Schienenfahrzeuges ablenken. Diese Deflektor-Elemente sind als ebene oder konvex gekrümmte Platten ausgebildet, welche parallel oder geneigt zur Oberkante der Schienen verlaufen. Um eine Verletzung der Bodenfreiheit des Schienenfahrzeuges zu vermeiden, kann das Deflektor-Element schwenkbar gelagert sein. Die Anwendung derartiger Deflektor-Elemente ist jedoch nur sinnvoll, wenn diese bereits im Zuge der Konzeptions- bzw. Konstruktionsphase als integraler Bestandteil in die Gestaltung der Unterflurbereiches eines Schienenfahrzeuges einfließen kann. Bei einer nachträglichen Umrüstung konventioneller Schienenfahrzeuge entstehen durch die Deflektor-Elemente Hohlräume, in denen sich Schneeablagerungen ansammeln können. Diese Ansammlungen können vereisen, durch dyna-mische Einwirkungen während der Fahrt gelockert werden und mit großer Wucht ins Schotterbett stürzen, wodurch wiederum der eigentlich unerwünschte Schotterflug hervorgerufen wird. Die Kausalität zwischen Eisbildung am Fahrzeug bzw. hierdurch verursachtem Eisabwurf und Schotterflug wurde in der Praxis aus den während der Wintermonate häufigeren und intensiveren Schotterflugbedingten Schadensbildern abgeleitet. Die DE 10 2004 041 090 A1 bietet zudem keinen Lösungsansatz für die infrastrukturseitigen Schäden aus dem Schotterflug an.

Einen ähnlichen Lösungsansatz verfolgt die technische Lehre der WO 2007/065682 A1. Diese offenbart eine Abschirmung gegen Steinschlag, die unter Impulseinwirkung von außen (z.B. durch einen auftreffenden Schotterstein) elastisch verformbar ausgeführt ist. Auf diese Weise werden die maximal wirkenden Kräfte, die beim Auftreffen eines Schottersteins auf das Schutzobjekt erzeugt werden, gegenüber einer aus DE 10 2004 041 090 A1 bekannten starren Anordnung gemindert. Aber auch die WO 2007/065682 A1 bietet keinen Lösungsansatz für die infrastrukturseitigen Schäden aus dem Schotterflug an.

Die EP 932 540 B1 schlägt zur Vermeidung der Vereisung von Bauteilen im Unterflurbereich von Schienenfahrzeugen vor, diese mit einer speziellen Oberflächenbeschichtung zu versehen, die aus einer äußeren, schlagfesten und nach Bauteil-Außen geneigten Schicht sowie einer inneren Schicht mit hohem Wärmdämmvermögen und hoher Elastizität besteht. Durch die innere isolierende Schicht soll während der Übergangsphase von Wasser oder Schnee in Eis eine Wärmeabgabe an die äußere Schicht erfolgen und dort ein Gefrieren von Wasser- oder Schnee an der Bauteil-Oberfläche verhindern. Ferner soll die innere Schicht eine niedrigere Steifigkeit als die äußere Schicht aufweisen und auf diese Weise örtliche Verformungen der Bauteil-Oberfläche ermöglichen, welche in eventuellen Eisansammlungen an der Bauteil-Oberfläche Spannungen induzieren und diese von der Oberfläche abbrechen lassen. In der Praxis ist dieser Lösungsansatz speziell im Falle der Umrüstung existierender Fahrzeuge problembehaftet, da sämtliche einzelnen Bauteile im Unterflur-Bereich eines Schienenfahrzeuges konstruktiv überarbeitet werden müssten. Bei komplexen geometrischen Bauteilgestaltungen und ungünstigen Witterungsverhältnissen können die in der EP 932 540 B1 vorgeschlagenen Vorrichtungen wegen ihrer vergleichsweise kleinen Dimensionierung eine Eisbildung nicht wirksam verhindern.

Der Erfindung liegt daher die Aufgabe zugrunde, ein Schienenfahrzeug für einen Fahrbetrieb auf Gleisanlagen mit Schotter-Oberbau derart auszubilden, dass eine Anlagerung von Schnee und Eis in Kavitäten des Fahrzeugunterbodens wirksam vermieden oder zumindest signifikant verringert wird. Insbesondere soll eine Lösung bereitgestellt werden, die eine einfache und kostengünstige Nachrüstung existierender Fahrzeuge ermöglicht.

Erfindungsgemäß wird diese Aufgabe in Verbindung mit dem Oberbegriff des Schutzanspruches 1 dadurch gelöst, dass die Membran quer zur Fahrtrichtung des Schienenfahrzeugs eingebaut ist. Diese Membran schirmt zum einen den darunter liegenden Hohlraum weitgehend gegen das Eindringen von Schnee ab und wird zum anderen auf Grund ihrer biegeschlaffen Ausführung während der Fahrt des Schienenfahrzeuges durch Luftverwirbelungen im Bereich des Schienenfahrzeug-Unterbodens sowie durch Vibrationen aus dem Fahrbetrieb des Schienenfahrzeuges zusätzlich zu dynamischen Schwingungen angeregt. Durch die biegeschlaffe Ausführung der Membran werden diese dynamischen Schwingungen in wellenförmige Bewegungsmuster umgesetzt, die die gesamte Oberfläche der Membran erfassen. Die durch diese Bewegungen verursachten Kräfte wirken auf sich an der Membran absetzende Wassertropfen oder Eiskristalle ein und führen zu einem Ablösen der Tropfen bzw. Kristalle von der Membran-Oberfläche sowie zu einem Aufbrechen bereits verfestigter Kristallstrukturen bzw. Verbindungen mehrerer Eiskristalle. Dadurch wird eine dauerhafte Anlagerung von Wassertropfen oder Eiskristallen an der Membran und somit deren Vereisung während der Fahrt wirksam vermieden. Eine eventuelle Eisbildung während Stillständen des Schienenfahrzeuges wird durch die Bewegungen der Membran während der Fahrt schon nach kurzer Zeit wieder aufgebrochen und abgeworfen. Größere Eisansammlungen werden somit durch das frühzeitige Abwerfen relativ kleiner Eis- und Schneeansammlungen wirksam vermieden. Zudem erfüllt dieses erfindungsgemäße Konzept alle Anforderungen, die an ein für die Nachrüstung existierender Schienenfahrzeuge geeignetes technisches Konzept gestellt werden. Die erfindungsgemäße Überspannung mit einer Membran ist zum einen individuell an die konkreten geometrischen Verhältnisse am Unterboden des Schienenfahrzeuges anpassbar. Zum anderen erfüllt sie die Anforderungen des Leichtbaus und erhöht das Gesamtgewicht eines Schienenfahrzeuges nur unwesentlich.

Die Membran ist quer zur Fahrtrichtung des Schienenfahrzeugs eingebaut. Durch eine solche Einbaulage der Membran werden die aerodynamischen Kräfte zur Beseitigung von Schnee- und Eisanlagerungen optimal ausgenutzt, so dass das erfinderische Konzept schon bei vergleichsweise geringen Fahrgeschwindigkeiten des Schienenfahrzeuges seine Wirkung entfalten kann.

Das Konzept der Erfindung sieht ferner vor, dass die Membran in biegeschlaffer Weise an fest mit dem Unterboden des Schienenfahrzeuges verbundenen Fixierpunkten befestigt ist. Zur Bereitstellung solcher definierter Befestigungspunkte kann am Unterboden des Schienenfahrzeuges jeweils mindestens ein Traggerüst angebracht sein. Die Membran weist in ihrem Randbereich Ösen auf, durch die hindurch die Abspannung mittels Gewindebolzen gegen das Traggerüst erfolgt. Die Abspannung der Membran darf jedoch nicht derart straff erfolgen, dass ihre Nachgiebigkeit hierdurch "auf Null" reduziert würde. Ein Mindestmaß an Schwingfähigkeit der Membran muss zur Funktionsfähigkeit des erfinderischen Konzepts aufrecht erhalten bleiben. Das hierfür vorgesehene Traggerüst kann dabei auf einem aus dem Stand der Technik bekannten Deflektor-Element aufgesetzt sein. Zur Unterstützung des erfinderischen Grundkonzeptes weist das Traggerüst idealerweise eine solchermaßen ausgestaltete Abschrägung auf, die ein schwerkraftunterstütztes und unbehindertes Abgleiten der Wassertröpfchen oder Eiskristalle - beispielsweise über eine Tropfkante der Membran - befördert.

Nach einer konkreten Ausführungsform der Erfindung weist die Membran eine Gewebearmierung auf. Auf diese Weise wird einem zu schlaffen Durchhängen der Membran entgegengewirkt, welches sich insbesondere bei hohen Fahrgeschwindigkeiten des Schienenfahrzeuges zu einem unkontrollierten Flattern der Membran aufschaukeln könnte. Die Gewebearmierung erhöht zudem die Betriebsfestigkeit der Membran gegenüber den im Fahrbetrieb des Schienenfahrzeuges herrschenden Umgebungsbedingungen.

Die Erfindungsidee wird wirksam unterstützt, wenn die vom Unterboden des Schienenfahrzeuges abgewandte, nach außen liegende Oberfläche der Membran mit einer hydrophoben Beschichtung versehen ist. Eine solche Beschichtung befördert das Abperlen von Wassertropfen an der Membran bevor diese dort anfrieren und die Grundlage für größere Eisanlagerungen bilden können. Die Beschichtung ist zwar auch während Stillstandzeiten des Schienenfahrzeuges wirksam, entfaltet aber insbesondere im Zusammenspiel mit den dynamischen Bewegungen der Membran während der Fahrt des Schienenfahrzeuges ihr volles Potential.

Gemäß einer weiteren Ausgestaltung des erfinderischen Grundkonzepts ist ein Zwischenraum zwischen Membran und Schienenfahrzeug-Unterboden mit mindestens einem verformungsfähigen dreidimensionalen Körper ausgefüllt. Ein solcher verformungsfähiger Körper wäre auch im Fall ungünstiger geometrische Einbau-Verhältnisse als Alternative zur Abspannung der Membran gegen fest mit dem Unterboden des Schienenfahrzeuges verbundene Fixierpunkte denkbar. In einem solchen Fall würde die Membran beispielsweise durch Klebeverbindungen mit der Hülle des verformungsfähigen Körpers verbunden werden. Die Verformung des Körpers kann passiv durch das Einwirken von Trägheitskräften während der Fahrt des Schienenfahrzeuges, alternativ oder ergänzend hierzu aber auch durch ein aktives System zur Volumenänderung dieses Körpers (beispielsweise durch oder durch aktives Variieren von dessen Innen-Luftdruck) erfolgen. Gemäß einer ersten Gestaltungsvariante kann dieser verformbare Körper deshalb als geschlossener, aufblasbarer Luftkörper ausgebildet sein. Dieser Luftkörper kann in mehrere voneinander abgetrennte Einzelkammern aufgeteilt sein, wodurch die Redundanz gegenüber einem unbeabsichtigten Druckverlust erhöht wird.
Gemäß einer zweiten Gestaltungsvariante kann der verformbare Körper auch aus Hartschaum ausgebildet sein.

Der Erfindungsgedanke wird in nachfolgenden Figuren verdeutlicht. Es zeigen:
- Figur 1: Schematische Darstellung des Drehgestellfreiraums eines erfindungsgemäß ausgeführten Schienenfahrzeuges mit einer biegeschlaff gegen Befestigungspunkte abgespannten Membran
- Figur 2: Schematische Darstellung des Drehgestellfreiraums eines erfindungsgemäß ausgeführten Schienenfahrzeuges mit einer auf der Außenfläche eines verformungsfähigen dreidimensionalen Körpers aufgebrachten Membran
- Figur 3: Schottwand des Drehgestellfreiraums mit angebrachten Tragrahmen

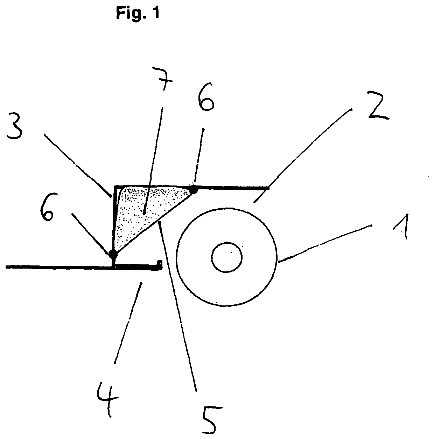

In Figur 1 ist der Drehgestellfreiraum (2) eines erfindungsgemäß ausgeführten Schienenfahrzeuges mit einer gegen Fixierpunkte (6) abgespannten Membran (5) schematisch dargestellt. Die Membran ist hierbei quer zur Fahrtrichtung des Schienenfahrzeuges angeordnet und deckt insbesondere die aus der Schottwand (3) und der Decke des Drehgestellfreiraum gebildete Eckvertiefung ab. Eine schräge Anordnung der Membran unterstützt in Verbindung mit einer hydrophoben Beschichtung der Membran-Außenseite ein Abgleiten bzw. Abfallen von sich an der Membran anlagerndem Schnee oder Eis.

Der Zwischenraum zwischen der Membran und der Schottwand bzw. der Decke des Drehgestellfreiraums ist mit einem volumemveränderbaren Formkörper (7) ausgestattet.

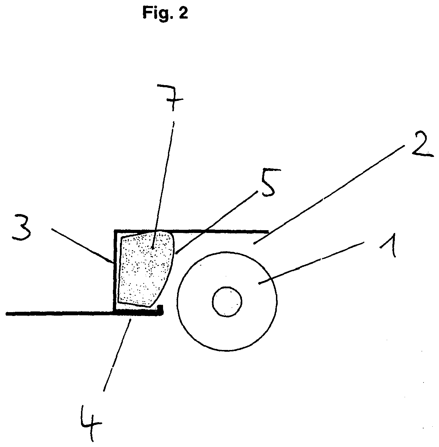

In Figur 2 ist der Drehgestellfreiraum (2) eines erfindungsgemäß ausgeführten Schienenfahrzeuges mit einer auf der Außenfläche eines verformungsfähigen dreidimensionalen Körpers (7) aufgebrachten Membran (5) schematisch dargestellt. In diesem Ausführungsbeispiel ist auf die schräge Anordnung der Membran weitgehend verzichtet. Anstelle des durch Luftbewegung induzierten Schwingens der biegeschlaffen Membran können die Relativbewegungen der Membran durch gezielte Veränderungen des Luftdrucks im Füllkörper ausgelöst werden.

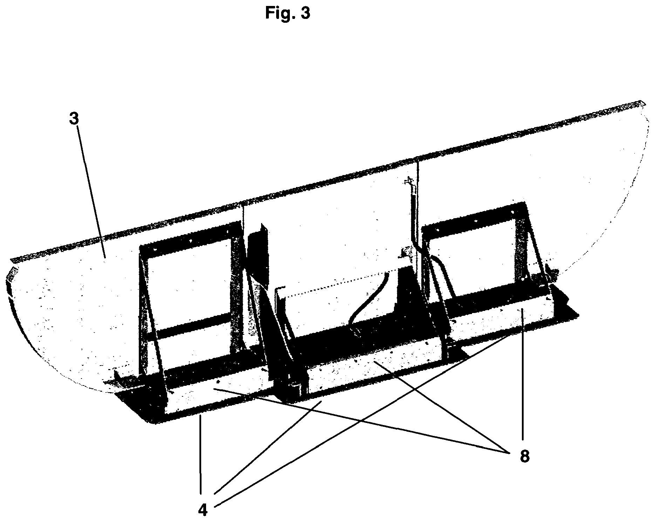

In Figur 3 ist die Schottwand (3) des Drehgestellfreiraums (2) dargestellt, an der drei Tragrahmen {8) zur Aufnahme einer Membran angebracht sind. Die Tragrahmen sind aus CrNi-Konstruktionsprofilen aufgebaut und sitzen auf Deflektor-Elementen (4) auf, mit denen sie lagestabil verschraubt sind. Die Tragrahmen weisen ferner Durchgangsbohrungen auf, durch die hindurch die Abspannung der Membran mittels Gewindebolzen erfolgt.

## Patentansprüche

1. Schienenfahrzeug für einen Fahrbetrieb auf Gleisanlagen mit Schotter-Oberbau, wobei das Schienenfahrzeug im Bereich seines Unterbodens mindestens eine biegeschlaffe Membran (5) aufweist, welche zu den Gleisanlagen hin offen liegende Hohlräume oder Tragwerks-Strukturen des Unterbodens des Schienenfahrzeuges überspannt,.
**dadurch gekennzeichnet, dass**
die Membran (5) quer zur Fahrtrichtung des Schienenfahrzeuges eingebaut ist.

2. Schienenfahrzeug für einen Fahrbetrieb auf Gleisanlagen mit Schotter-Oberbau nach Patentanspruch 1, **dadurch gekennzeichnet, dass**
die Membran (5) in biegeschlaffer Weise an fest mit dem Unterboden des Schienenfahrzeuges verbundenen Fixierpunkten (6) befestigt ist.

3. Schienenfahrzeug für einen Fahrbetrieb auf Gleisanlagen mit Schotter-Oberbau nach einem der Patentansprüche 1 oder 2, **dadurch gekennzeichnet, dass**
die Membran (5) eine Gewebearmierung aufweist.

4. Schienenfahrzeug für einen Fahrbetrieb auf Gleisanlagen mit Schotter-Oberbau nach einem der Patentansprüche 1 bis 3, **dadurch gekennzeichnet, dass**
die vom Unterboden des Schienenfahrzeuges abgewandte, nach außen liegende Oberfläche der Membran (5) mit einer hydrophoben Beschichtung versehen ist.

5. Schienenfahrzeug für einen Fahrbetrieb auf Gleisanlagen mit Schotter-Oberbau nach einem der Patentansprüche 1 bis 4, **dadurch gekennzeichnet, dass**
ein Zwischenraum zwischen Membran und Schienenfahrzeug Unterboden mit mindestens einem verformungsfähigen dreidimensionalen Körper (7) ausgefüllt ist.

6. Schienenfahrzeug für einen Fahrbetrieb auf Gleisanlagen mit Schotter-Oberbau nach Patentanspruch 5, **dadurch gekennzeichnet, dass**
der verformungsfähige dreidimensionale Körper (7) als geschlossener, aufblasbarer Luftkörper ausgebildet ist.

7. Schienenfahrzeug für einen Fahrbetrieb auf Gleisanlagen mit Schotter-Oberbau nach Patentanspruch 5,
**dadurch gekennzeichnet, dass**
der verformungsfähige dreidimensionale Körper (7) aus Hartschaum ausgeführt ist.

## Claims

1. Rail vehicle for a driving operation on track systems having a ballasted superstructure, wherein the rail vehicle in the region of its underbody has at least one flexible membrane (5), which spans over hollow spaces or supporting framework structures of the underbody of the rail vehicle that are open toward the track system, **characterised in that** the membrane (5) is installed transversely to the travel direction of the rail vehicle.

2. Rail vehicle for a driving operation on track systems having a ballasted superstructure according to claim 1, **characterised in that** the membrane (5) is fastened in a flexible manner at fixing points (6) connected securely to the underbody of the rail vehicle.

3. Rail vehicle for a driving operation on track systems having a ballasted superstructure according to any one of claims 1 or 2, **characterised in that** the membrane (5) has a fabric enforcement.

4. Rail vehicle for a driving operation on track systems having a ballasted superstructure according to any one of claims 1 to 3, **characterised in that** the outwardly facing surface of the membrane (5) which faces away from the underbody of the rail vehicle is provided with a hydrophobic coating.

5. Rail vehicle for a driving operation on track systems having a ballasted superstructure according to any one of claims 1 to 4, **characterised in that** a space between membrane and rail vehicle underbody is filled with at least one deformable three-dimensional body (7).

6. Rail vehicle for a driving operation on track systems having a ballasted superstructure according to claim 5, **characterised in that** the deformable three-dimensional body (7) is designed as a closed, inflatable air body.

7. Rail vehicle for a driving operation on track systems having a ballasted superstructure according to claim 5, **characterised in that** the deformable three-dimensional body (7) is made from rigid foam.

## Revendications

1. Véhicule sur rails pour un mode de déplacement sur des voies ferrées à superstructure ballastée, dans lequel le véhicule sur rails présente dans la zone de son dessous de caisse au moins une membrane flexible (5) qui recouvre des espaces creux se trouvant ouverts vers les voies ferrées ou des structures porteuses du dessous de caisse du véhicule sur rails,
**caractérisé en ce que**
la membrane (5) est intégrée transversalement au sens de la marche du véhicule sur rails.

2. Véhicule sur rails pour un mode de déplacement sur des voies ferrées à superstructure ballastée selon la revendication 1,
**caractérisé en ce**
**que** la membrane (5) est fixée de manière flexible sur des points de fixation (6) raccordés fixement au dessous de caisse du véhicule sur rails.

3. Véhicule sur rails pour un mode de déplacement sur des voies ferrées à superstructure ballastée selon l'une quelconque des revendications 1 ou 2,
**caractérisé en ce**
**que** la membrane (5) présente une armature textile.

4. Véhicule sur rails pour un mode de déplacement sur des voies ferrées à superstructure ballastée selon l'une quelconque des revendications 1 à 3,
**caractérisé en ce**
**que** la surface de la membrane (5) se trouvant vers l'extérieur, éloignée du dessous de caisse du véhicule sur rails est pourvue d'un revêtement hydrophobe.

5. Véhicule sur rails pour un mode de déplacement sur des voies ferrées à superstructure ballastée selon l'une quelconque des revendications 1 à 4,
**caractérisé en ce**
**qu'**un espace intermédiaire entre la membrane et le dessous de caisse du véhicule sur rails est rempli avec au moins un corps (7) en trois dimensions apte à la déformation.

6. Véhicule sur rails pour un mode de déplacement sur des voies ferrées à superstructure ballastée selon la revendication 5,
**caractérisé en ce**
**que** le corps (7) en trois dimensions apte à la déformation est réalisé en tant que corps d'air gonflable fermé.

7. Véhicule sur rails pour un mode de déplacement sur des voies ferrées à superstructure ballastée selon la revendication 5,
**caractérisé en ce**
**que** le corps (7) en trois dimensions apte à la déformation est réalisé en mousse dure.
